# FASCICULE DE BREVET EUROPEEN

(11) **EP 1 644 659 B1**
(45) Date de publication et mention de la délivrance du brevet: **26.05.2010**
(21) Numéro de dépôt: 04767848.7
(22) Date de dépôt: 22.06.2004
(51) Int. Cl.: F17C 3/08

(54) **RESERVOIR DE FLUIDE CRYOGENIQUE ET UTILISATION DANS UN VEHICULE AUTOMOBILE**
BEHÄLTER FÜR KRYOGENES FLUID UND VERWENDUNG IN EINEM KRAFTFAHRZEUG
CRYOGENIC FLUID TANK AND USE IN A MOTOR VEHICLE

(30) Priorité: 02.07.2003 FR 0308030
(43) Date de publication de la demande: 12.04.2006
(73) Titulaire: L'AIR LIQUIDE, Société Anonyme pour l'Etude et l'Exploitation des Procédés Georges Claude, 75007 Paris (FR)
(72) Inventeur: JANIN, Florent, F-38430 Moirans (FR); ALLIDIERES, Laurent, F-38410 Uriage (FR); FAURE, Eric, F-38500 Coublevie (FR)
(74) Mandataire: De Cuenca, Emmanuel Jaime
(86) Numéro de dépôt international: PCT/FR2004/050286
(87) Numéro de publication internationale: WO 2005/005878

(56) Documents cités:
- DE-A- 19 816 651
- FR-A- 2 813 378
- US-A- 4 964 524
- US-A- 5 263 604
- US-A1- 2001 019 061

## Description

La présente invention concerne les réservoirs de fluide cryogénique, notamment de cryogène liquide, du type comprenant une enveloppe interne disposée dans une enveloppe externe avec interposition d'un espace d'isolation sous vide, les enveloppes ayant une configuration générale aplatie, par exemple parallélépipédique.

Pour des questions de logeabilité, les réservoirs embarqués, notamment dans des véhicules automobiles, doivent présenter des formes aplaties qui ne présentent pas les mêmes caractéristiques de tenue mécanique avantageuse que les formes sphériques ou cylindriques habituelles pour le stockage de fluides sous pression. De plus, les réservoirs embarqués doivent être capables de résister à des accélérations transversales importantes, ce qui pose des problèmes au niveau de la tenue mécanique des enveloppes, mais aussi de leur assemblage mutuel, ce dernier problème étant encore compliqué par les questions d'échange thermique entre les deux enveloppes.

Un exemple de réservoir est divulgué par DE 198 16 651.

La présente invention a précisément pour objet de proposer une structure de réservoir de fluide cryogénique liquide à double enveloppe alliant une grande résistance mécanique à une grande légèreté.

Pour ce faire, selon une caractéristique de l'invention, le réservoir comprend au moins une structure tubulaire creuse reliant les deux faces principales de l'enveloppe interne et dans laquelle s'étend au moins un élément de liaison rigide, reliant les deux faces principales de l'enveloppe externe, et au moins deux éléments de liaison souple, reliant respectivement une face principale de l'enveloppe externe à une face principale de l'enveloppe interne.

Selon d'autres caractéristiques de l'invention :
- chaque élément de liaison souple relie une face principale d'une enveloppe à la face principale opposée de l'autre enveloppe,
- les éléments de liaison souples sont montés sous tension en traction entre des rotules d'extrémités.
- le réservoir comprend une pluralité d'éléments de liaison souple angulairement répartis autour de l'élément de liaison rigide.

La présente invention concerne également l'utilisation d'un tel réservoir pour le stockage d'un cryogène liquide utilisé comme source de puissance dans un véhicule automobile.

D'autres caractéristiques et avantages de la présente invention ressortiront de la description suivante d'un mode de réalisation, donnés à titre illustratif mais nullement limitatif, faite en relation avec les dessins annexés, sur lesquels :
- la figure 1 est une vue schématique en coupe partielle verticale d'un réservoir selon l'invention de configuration générale parallélépipédique ;
- la figure 2 est une vue en perspective d'une moitié d'enveloppe interne ;
- la figure 3 est une vue en perspective d'une moitié d'enveloppe externe ; et
- la figure 4, est une vue en perspective du système de supportage de l'enveloppe interne dans l'enveloppe externe de la figure 1.

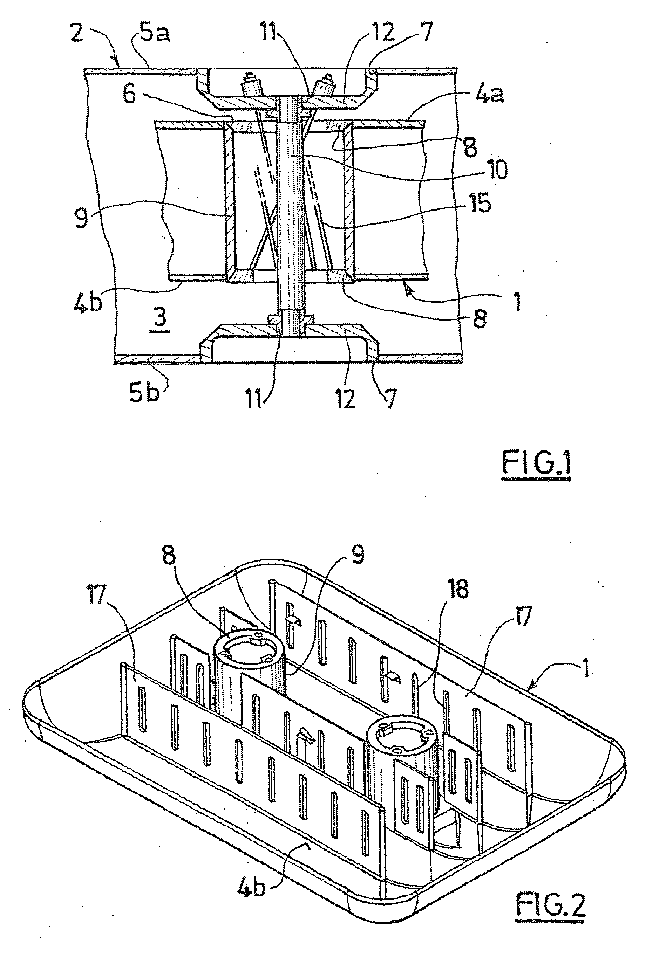

Sur la figure 1 on a représenté schématiquement (les épaisseurs des parois ne sont pas toutes à l'échelle) une portion d'une enveloppe de stockage interne, généralement désignée par la référence 1, disposée dans une enveloppe externe, généralement désignée par la référence 2, un espace d'isolation sous vide 3 étant ménagé entre les deux enveloppes 1 et 2.

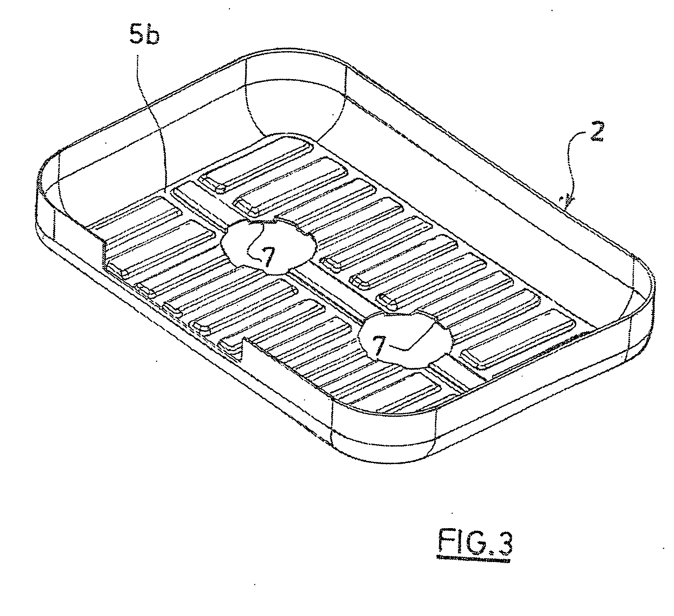

Dans le mode de réalisation représenté, les enveloppes 1 et 2 présentent une configuration générale parallélépipédique, comme on le voit bien sur les figures 2 et 3, avec chacune des faces principales en vis à vis 4a et 4b pour l'enveloppe interne 1 et 5a, 5b pour l'enveloppe externe 2.

Les faces principales comportent au moins une, typiquement deux, dans les exemples représentés paires d'orifices en regard coaxiaux, 6 pour les parois de l'enveloppe interne 1, et 7 pour les parois de l'enveloppe externe.

Dans les orifices 6 de l'enveloppe interne 1 sont montées, typiquement par soudage plasma, des bagues d'extrémités annulaires 8 d'une structure tubulaire interne 9 assurant une liaison rigide entre les faces principales 4a et 4b de l'enveloppe interne 1 et au travers duquel s'étend un tube central 10 se prolongeant des deux côtés dans l'espace intermédiaire sous vide 3 et fixé, par soudage, par ses extrémités à épaulements 11 dans les faces planes en regard de coupelles cylindriques 12 montées, typiquement par soudage plasma, dans les orifices 7 en regard des faces principales 5a et 5b de l'enveloppe externe 2.

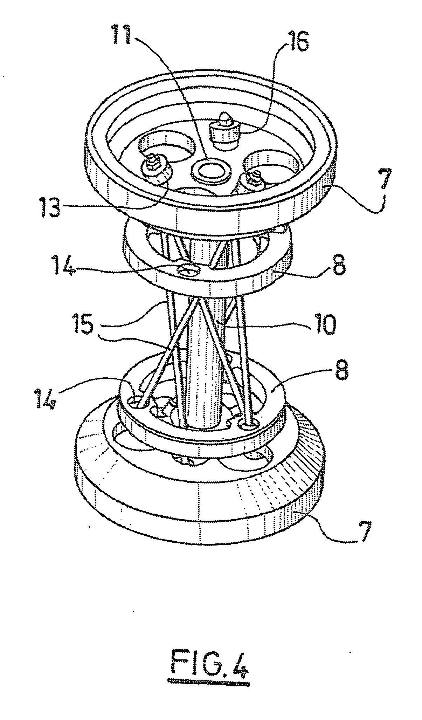

Comme on le voit mieux sur la figure 4, les fonds des coupelles 7 et les bagues 8 comportent des orifices, 13,14, respectivement, permettant le passage de tirants 15 et servant extérieurement de logement pour des rotules de fixation et de serrage sous tension 16 de ces tirants 15.

Selon l'invention, comme on le voit bien sur les figures 1 et 4, les tubes rigides de liaison 9 et 10 assurent, pour chaque enveloppe, la reprise des efforts appliqués aux faces principales des enceintes internes et externes, et les tirants 15 ont chacun une extrémité reliée à une face principale (par exemple 5a) de l'enveloppe externe (via la coupelle 12) et l'autre extrémité reliée à la face principale opposée (dans cet exemple : 4b) de l'enveloppe externe 1 (via la bague 8). L'enveloppe interne se trouve ainsi totalement suspendue dans l'enveloppe externe, tout déplacement vertical entre les enveloppes étant interdit, tout déplacement latéral entre les enveloppes étant également interdit en doublant le système de supportage comme dans l'exemple représenté.

Comme représenté sur les figures 2 et 3, les enveloppes 1 et 2 sont nervurées pour augmenter leur rigidité, et l'enveloppe interne 1 comporte intérieurement une série de cloisons parallèles 17 verticales renforcées par des bossages 18 permettant d'effectuer des opérations de mise en vide du réservoir sans provoquer d'affaissement de ce dernier, s'étendant longitudinalement sur la majeure partie de la longueur de l'enveloppe 1 en ménageant des espaces pour les structures tubulaires 9.

Comme on le comprendra, avec l'agencement qui vient d'être décrit, les tendances à l'écrasement des enveloppes 1 et 2 sont reprises en compression par les entretoises rigides 9 et 10, respectivement, tandis que les tendances au gonflement de l'enveloppe interne 1, en raison des différentiels de pression de part et d'autre de ses parois, sont reprises en tensions équiréparties par les tirants 15 en conservant le caractère « flottant » de l'enveloppe 1.

Pour des applications de stockage dans des véhicules automobiles de combustible cryogénique liquide, tel que gaz naturel liquéfié ou hydrogène, les enveloppes 1 et 2 sont avantageusement réalisées en acier inoxydable d'une épaisseur inférieure à 4 mm, typiquement inférieure à 3 mm, sous forme de deux demi-coques forgées, assemblées par leur plan méridien parallèle aux faces principales 4 et 5. Les tubes de liaison 9 et 10, les bagues 8 et les coupelles 7 sont également avantageusement en acier inoxydable et les tirants 15 sont avantageusement en torons de fibres non métallique, typiquement en verre époxy d'un diamètre n'excédant pas 5 mm. Dans ce mode de réalisation, on prévoit en alternance angulaire autour du tube 10, trois tirants 15 tendus entre les faces 5a et 4b et trois tirants tendus entre les faces 5b et 4a.

Bien que l'invention ait été décrite en relation avec un mode de réalisation particulier, elle ne s'en trouve pas limitée mais est susceptible de modifications et de variantes qui apparaîtront à l'homme du métier dans le cadre des revendications ci-après. En particulier, le réservoir peut, selon les besoins d'implantation in situ, présenter d'autre formes aplaties, par exemple en forme de disque, au moins partiellement de révolution, éventuellement oblong, ou segmenté en forme de pétales.

## Revendications

1. Réservoir de fluide cryogénique, comprenant une enveloppe interne (1) disposée dans une enveloppe externe (2) avec interposition d'un espace d'isolation sous vide (3), les enveloppes ayant une configuration générale aplatie, comprenant au moins une structure tubulaire (9), reliant les deux faces principales (4a, 4b) de l'enveloppe interne (1), et dans laquelle s'étend au moins un élément de liaison rigides (10) reliant les deux faces principales (5a, 5b) de l'enveloppe externe (2), **caractérisé en ce qu'**il comprend au moins deux éléments de liaison souples (15) reliant respectivement une face principale de l'enveloppe externe et une face principale de l'enveloppe interne.

2. Réservoir selon la revendication 1, **caractérisé en ce que** chaque élément de liaison souple (15) relie une face principale d'une enveloppe à la face principale opposée de l'autre enveloppe.

3. Réservoir selon l'une des revendications 1 et 2, **caractérisé en ce que** les éléments de liaison souple (15) sont montés en traction entre des rotules d'extrémité (16).

4. Réservoir selon l'une des revendications précédentes, **caractérisé en ce que** la structure tubulaire (9) est solidaire de deux bagues d'extrémité (8) fixées aux faces principales (4a, 4b) de l'enveloppe interne (1).

5. Réservoir selon l'une des revendications précédentes, **caractérisé en ce que** l'élément de liaison rigide (10) est monté entre deux coupelles cylindriques (12) fixées aux faces principales (5a, 5b) de l'enveloppe externe (2).

6. Réservoir selon l'une des revendications 2 à 5, **caractérisé en ce qu'**il comporte une pluralité d'éléments de liaison souples (15) angulairement répartis autour de l'élément de liaison rigide (10).

7. Réservoir selon l'une des revendications précédentes, **caractérisé en ce que** les éléments de liaison souples (15) sont constitués de torons de fibres non métalliques.

8. Réservoir selon l'une des revendications précédentes, **caractérisé en ce que** les enveloppes (1 ;2) sont métalliques.

9. Réservoir selon la revendication 8, **caractérisé en ce que** les enveloppes (1 ;2) sont réalisées en tôle d'épaisseur inférieure à 4 mm.

10. Utilisation d'un réservoir selon l'une des revendications précédentes pour le stockage de fluide cryogénique dans un véhicule automobile.

## Claims

1. Cryogenic fluid tank comprising an inner casing (1) arranged in an outer casing (2) with a vacuum insulation space (3) in between, the casings having a flattened general configuration, comprising at least one tubular structure (9) which connects the two main faces (4a, 4b) of the inner casing (1) and in which there extends at least one rigid linking element (10) connecting the two main faces (5a, 5b) of the outer casing (2), **characterized in that** it comprises at least two flexible linking elements (15) respectively connecting a main face of the outer casing and a main face of the inner casing.

2. Tank according to Claim 1, **characterized in that** each flexible linking element (15) connects a main face of one casing to the opposed main face of the other casing.

3. Tank according to either of Claims 1 and 2, **characterized in that** the flexible linking elements (15) are mounted in tension between end swivel fittings (16).

4. Tank according to one of the preceding claims, **characterized in that** the tubular structure (9) is integral with two end rings (8) fastened to the main faces (4a, 4b) of the inner casing (1).

5. Tank according to one of the preceding claims, **characterized in that** the rigid linking element (10) is mounted between two cylindrical cups (12) fastened to the main faces (5a, 5b) of the outer casing (2).

6. Tank according to one of Claims 2 to 5, **characterized in that** it has a plurality of flexible linking elements (15) angularly distributed around the rigid linking element (10).

7. Tank according to one of the preceding claims, **characterized in that** the flexible linking elements (15) consist of strands of nonmetallic fibers.

8. Tank according to one of the preceding claims, **characterized in that** the casings (1; 2) are metallic.

9. Tank according to Claim 8, **characterized in that** the casings (1; 2) are made of sheet metal having a thickness below 4 mm.

10. Use of a tank according to one of the preceding claims for the storage of cryogenic fluid in a motor vehicle.

## Patentansprüche

1. Behälter für kryogenes Fluid, umfassend eine innere Schale (1), die in einer äußeren Schale (2) mit einem Vakuumisolierraum (3) dazwischen angeordnet ist, wobei die Schalen eine allgemein abgeflachte Konfiguration aufweisen, mit mindestens einer röhrenförmigen Struktur (9), die die beiden Hauptflächen (4a, 4b) der inneren Schale (1) verbindet und in der sich mindestens ein starres Verbindungselement (10) erstreckt, das die beiden Hauptflächen (5a, 5b) der äußeren Schale (2) verbindet, **dadurch gekennzeichnet, dass** er mindestens zwei flexible Verbindungselemente (15) umfasst, die jeweils eine Hauptfläche der äußeren Schale und eine Hauptfläche der inneren Schale verbinden.

2. Behälter nach Anspruch 1, **dadurch gekennzeichnet, dass** jedes flexible Verbindungselement (15) eine Hauptfläche einer Schale mit der gegenüberliegenden Hauptfläche der anderen Schale verbindet.

3. Behälter nach einem der Ansprüche 1 und 2, **dadurch gekennzeichnet, dass** die flexiblen Verbindungselemente (15) unter Zugspannung zwischen Endkugelgelenken (16) angebracht sind.

4. Behälter nach einem der vorhergehenden Ansprüche, **dadurch gekennzeichnet, dass** die röhrenförmige Struktur (9) fest mit zwei Endringen (8) verbunden ist, die an den Hauptflächen (4a, 4b) der inneren Schale (1) befestigt sind.

5. Behälter nach einem der vorhergehenden Ansprüche, **dadurch gekennzeichnet, dass** das starre Verbindungselement (10) zwischen zwei zylindrischen Tellern (12) angebracht ist, die an den Hauptflächen (5a, 5b) der äußeren Schale (2) befestigt sind.

6. Behälter nach einem der Ansprüche 2 bis 5, **dadurch gekennzeichnet, dass** er mehrere flexible Verbindungselemente (15) aufweist, die winkelförmig um das starre Verbindungselement (10) herum verteilt sind.

7. Behälter nach einem der vorhergehenden Ansprüche, **dadurch gekennzeichnet, dass** die flexiblen Verbindungselemente (15) aus Litzen aus nichtmetallischen Fasern bestehen.

8. Behälter nach einem der vorhergehenden Ansprüche, **dadurch gekennzeichnet, dass** die Schalen (1; 2) metallisch sind.

9. Behälter nach Anspruch 8, **dadurch gekennzeichnet, dass** die Schalen (1; 2) aus Blech mit einer Dicke von weniger als 4 mm hergestellt sind.

10. Verwendung eines Behälters nach einem der vorhergehenden Ansprüche zur Lagerung von kryogenem Fluid in einem Kraftfahrzeug.
